# EUROPEAN PATENT SPECIFICATION

(11) **EP 2 417 444 B1**
(45) Date of publication and mention of the grant of the patent: **10.08.2016**
(21) Application number: 09808995.6
(22) Date of filing: 31.12.2009
(51) Int. Cl.: G01N 29/02, G01N 29/44, B60S 1/08, G01B 21/22

(54) **ACOUSTIC METHOD AND DEVICE FOR INVESTIGATING THE PRESENCE AND/OR PROPERTIES OF A LIQUID DROPLET**
AKUSTISCHES VERFAHREN UND AKUSTISCHE VORRICHTUNG ZUR UNTERSUCHUNG DER PRÄSENZ UND/ODER EIGENSCHAFTEN EINES FLÜSSIGKEITSTROPFENS
PROCÉDÉ ET DISPOSITIF ACOUSTIQUE POUR LA INVESTIGATION DE LA PRÉSENCE ET/OU DES CARACTÉRISTIQUES D'UNE GOUTTE LIQUIDE

(30) Priority: 07.04.2009 DE 102009016350
(43) Date of publication of application: 15.02.2012
(73) Proprietor: Hochschule für angewandte Wissenschaften Fachhochschule Coburg, 96450 Coburg (DE)
(72) Inventor: LINDNER, Gerhard, 96450 Coburg (DE); STICH, Sebastian, 92318 Neumarkt i.d.OPf (DE); SCHMIDT, Katrin, 96523 Steinach (DE); KREMPEL, Sandro, 96515 Sonneberg (DE); SCHLEMMER, Josefine, 96486 Lautertal (DE)
(74) Representative: Maikowski & Ninnemann Patentanwälte Partnerschaft mbB
(86) International application number: PCT/EP2009/068054
(87) International publication number: WO 2010/115480

(56) References cited:
- DE-A1- 4 033 975
- JP-A- 9 145 692
- US-A- 6 015 449
- US-A1- 2006 125 804

## Description

The invention relates to methods for investigating the presence and/or properties of a liquid droplet and to an according sensor device. It is known from the prior art to use optical methods for detecting liquid droplets on solid substrates. For example, optical devices are used to detect rain drops on a windshield of a vehicle or to monitor liquid filled conducts or pipes in order to detect leakages.

US patent 6,015,449 discloses an acoustic rain drop detecting device by evaluating the amplitude variation of transmitted ultrasonic waves. The objective of the invention is to provide a method and a sensor device for monitoring droplets on a substrate that can be applied in a simple manner.

According to the invention, methods for investigating the presence and/or properties of a liquid droplet according to claims 1 and 11 are provided.

The acoustic waves excited by the transmitter propagate towards the receiver in the substrate and are detected by the receiver. However, if a liquid droplet is present on the substrate at least a part of the acoustic waves propagating in the substrate will be converted into acoustic waves propagating in the droplet provided that the acoustic waves excited in the substrate comprise displacements at the surface of the substrate having a non-vanishing sagittal component (which is fulfilled e.g. by Lamb- or Rayleigh-Waves) and provided that the velocity of sound in the liquid of the droplet is smaller than the wave velocity in/on the substrate (which is true for common combinations of liquids and substrate materials such as water or oil on metal, glass, ceramics or many plastics). Therefore, the presence of a droplet on the substrate will cause a change of the acoustic wave arriving at the receiver and thus the (electrical) signal generated by the receiver. For example, the amplitude of the receiver signal will decrease if a droplet is present on the surface of the substrate. Also, a variation of droplet properties (such as the contact angle between the droplet and the substrate surface) will result in a change of the receiver signal.

For example, the method of exciting the acoustic waves in the subtrate and the frequency of the acoustic waves are chosen in such a way that the excited waves are surface acoustic waves in the form of Lamb waves or Lamb-Rayleigh waves. For this, the frequency of the excited waves in the substrate is adapted to the substrate thickness such that concurrent surface acoustic waves are excited that propagate on both a first side and a second side of the substrate, wherein the first side is configured to receive the droplets and the second side faces away from the first side. In particular, the transmitter and the receiver are arranged in a row along the propagating direction of the acoustic wave excited in the substrate, wherein the transmitter and the receiver may be arranged on the same side or on different sides of the substrate.

In the case of Lamb waves or Lamb-Rayleigh-waves the displacement of opposite surfaces of the substrate (i.e. of the first and the second side of the substrate) excited by the transmitter is correlated such that, in particular, the amplitude and/or the phases of the displacement movement of the (e.g. inner and outer) surfaces of the structure are interrelated. For example, the acoustic waves excited in the structure will be mainly or only of the Lamb wave type if the thickness of the substrate is substantially smaller than the wavelength of the excited acoustic waves.

However, as set forth above, also a transition type of Lamb waves and Rayleigh waves can be used, i.e. the thickness of the substrate can be of the same order of magnitude as the wave length of the excited acoustic waves. In that case there can still be a correlation between the displacement movement of the opposite surfaces of the substrate (e.g. of the outer atomic layers of the surfaces of the structure). For example, the thickness of the substrate is in the range between 0.1 mm to 5 mm. The excitation frequency may be chosen to be in the range between 500 kHz and 2 MHz, in particular between 800 kHz and 1.5 MHz.

The method according to the invention may further comprise arranging the transmitter and the receiver on the substrate, wherein the transmitter and/or the receiver might be equipped with means for detachably fixing the transmitter and/or the receiver to the substrate. The transmitter and/or the receiver may be interdigital piezo-electric transducers. It is noted, however, that the term "transmitter" is not restricted to a piezoelectric transducer. Other embodiments of the invention comprise arranging a transmitter in the form of a (e.g. pulsed) laser that excites the acoustic waves in the substrate based on thermoelastic effects. Also, a wedge ("wedge converter") could be used ) to excite the acoustic waves or a comb-like vibrator ("comb converter"), wherein the wedge converter and/or the comb converter may be used in combination with a piezo-electric transducer. Of course different transmitter types could also be used in combination. Also, the receiver does not necessarily have to be an interdigital piezoelectric transducer. For example, a receiver in the form of an optical displacement detector such as an interferometer or a laser-doppler-vibrometer could be used. Further, the receiver may also contain detection means (e.g. at least one photoelectric detector) generating electrical signals.

Evaluating the signal generated by the receiver upon receipt of the acoustic waves, for example, comprises evaluating a first signal generated by the receiver at a first point in time and evaluating a second signal generated by the receiver at a second point in time. Of course, more than two signals generated at more than two points in time can be evaluated such that the presence of a droplet and/or properties of a droplet on the substrate can be monitored continuously (or at least quasi-continuously).

Also, evaluating the signal generated by the receiver can comprise evaluating the amplitude and the time response (transmission time) of the signal. As set forth above, the presence of a droplet on the substrate will cause some of the acoustic wave energy in the substrate to be converted into wave energy in the droplet such that the amplitude of the acoustic wave arriving at the receiver is smaller compared to a substrate without a droplet.

As to evaluating the time response of the receiver signal, the transmitter, for example, excites pulsed acoustic waves in the substrate which have a certain propagation time from the transmitter to the receiver (depending on the path they take between the transmitter and the receiver). Modifications of the interface between the substrate and its surroundings will influence the transmission time (i.e. the time a wave front or an acoustic pulse needs to run from the transmitter to the receiver) of the acoustic waves in the substrate. Thus, evaluating changes of the transmission time may contribute to the determination of properties of a droplet or to the verification whether or not a droplet is present on the substrate.

Further, for example, evaluating the signal generated by the receiver comprises comparing the results of the evaluation with pre-determined values. In particular, the amplitude and/or the time response of the receiver signal are compared to pre-determined amplitude and/or time response values. The pre-determined values may be generated using a substrate on which a droplet is arranged, wherein at least some of the properties of the droplet (e.g. its volume and contact angle) are known. Also, the pre-determined values could be determined using a substrate without a droplet to obtain reference values for a "droplet free" structure. In other words, the transmitter-receiver-substrate arrangement is calibrated. Variations from the calibration values indicate the presence of a droplet or permit to determine a change of the properties of the droplet.

It is also possible to derive properties of a droplet on the substrate by simulating the interfaces between the surface of the substrate and the droplet and between the droplet and its surrounding (e.g. air). The simulation may contain different unknown parameters related to droplet properties (e.g. its contact angle with respect to the substrate surface) which are to be determined by means of values extracted from the receiver signals (such as values related to the amplitude and the time response, i.e. the transmission time of the acoustic waves).

For example, a three phase model could be used to simulate the substrate, the droplet and the surroundings of the droplet and the substrate, wherein certain properties (for example, material parameters of the substrate and the droplet) are assumed to be known. Other parameters (such as the contact angle of the droplet) of the model are unknown and are to be determined using the evaluated receiver signals.

According to another embodiment of the invention, the substrate has a first side (first surface) for receiving the droplet, the method comprising arranging the transmitter and the receiver on a second side (second surface) of the substrate that faces away from the first side, thereby avoiding that the transmitter and the receiver will be in contact with the droplets to be detected. In another example, however, a pre-assembled substrate is used comprising a first side for receiving the droplets and a second side on which the transmitter and the receiver are arranged.

For example, the method comprises arranging the transmitter and the receiver on an inner surface of a window pane, for example on an inner side of a wind shield of a vehicle, the inner side facing towards the interior of the vehicle. In particular, the signal generated by the receiver can be used to control a wiper assigned to the wind shield.

According to a first aspect, the method according to the invention comprises arranging the transmitter and the receiver on the substrate and arranging the substrate in the proximity of a conduct filled with a liquid such that liquid escaping from a leakage of the conduct generates one or more droplets on a surface of the substrate, wherein the droplets will be detected according to step e). This embodiment can be used to monitor all kinds of liquid filled conducts such as pipes or channels used, for example, within a technical device or which are installed outdoor.

Further more, according to a second aspect of the invention, a contact angle of a droplet on the substrate may be determined using the results of step d). The contact angle is the angle at which a droplet on the substrate meets the substrate surface. As droplets of the same volume but with different contact angles wet different areas of the substrate surface, the amplitude and the transmission time of the receiver signal will be different for droplets with different contact angles. Thus, the amplitude and the transmission time could be used - in particular after calibration of the transmitter-receiver-arrangement - to determine the contact angle of a droplet (and thus the surface tension between the droplet and its surroundings).

According to another embodiment of the invention, the method comprises arranging the transmitter and the receiver on a substrate that consists of at least one material selected from the group comprising glass, ceramics, plastic and metal. In other words, the transmitter-receiver arrangement has not to be disposed on a piezoelectric material. Rather, the transmitter and/or the receiver may be an interdigital transducer arranged on any suitable kind of a non-piezoelectric solid substrate.

It is noted that the transmitter and the receiver do not necessarily have to be separate units. It is also possible that the transmitter and the receiver are realized by a single transmitter/receiver device which can be operated (e.g. alternately) as transmitter and receiver. For example, only one interdigital transducer is provided which is switched to operate as a transmitter for a first period of time and as a receiver for a second period of time.

Further, reflecting means can be provided for reflecting acoustic waves generated by the transmitter. In particular, the transmitter and the receiver are arranged with respect to the reflecting means in such a way that acoustic waves excited in the substrate by the transmitter are reflected by the reflecting means such that the acoustic waves pass the region of the liquid droplet at least twice before arriving at the receiver. This arrangement could be used to enhance the sensibility of the droplet detection.

Further, if a combined transmitter/receiver device, i.e. a single device which is used as transmitter as well as receiver, is employed the transmitter/receiver device may be operated for a first period of time as a transmitter generating an acoustic wave pulse, and, for a second period of time, as a receiver receiving the acoustic wave pulse generated by the transmitter/receiver device during the first period of time and reflected by the reflecting means.

The invention also relates to a sensor device according to claim 12.

The evaluation and/or the determination means might for example be implemented as an electrical circuit, e.g. in the form of a microchip. The microchip may also be arranged on the substrate. However, it is also conceivable that the evaluation means and/or the determination means are not realized in form of an integrated circuit but comprise a measurement device arranged separately to the transmitter-receiver arrangement and/or the substrate. In particular, the measurement device (such as an oscilloscope or a computer) is connected to the receiver in order to register the electrical receiver signals.

Further, the evaluation and/or the determination means may be realized by a programmable unit running a computer program that evaluates the receiver signals registered by the measurement device and determines whether a droplet is present on the substrate and/or if a droplet is present determines the position and/or properties of the droplet.

According to an embodiment, the sensor device comprises reflecting means and the transmitter and the receiver are arranged with respect to the reflecting means in such a way that acoustic waves excited in the substrate by the transmitter are reflected at the reflecting means such that the acoustic waves pass the region of the liquid droplet at least twice before arriving at the receiver as already set forth above.

For example, the reflecting means comprise an edge of the substrate. However, the reflecting means may also comprise or consist of structures that were added to the substrate such as, for example, at least one groove (generated e.g. by etching or mechanical processing of the substrate) or at least one elevation (generating e.g. by adding a material layer to the substrate and processing of the material layer).

The sensor device according to the invention may be installed, for example, in the vicinity of potential leakage areas of a liquid filled conduct.

The embodiments of the invention will be described in more detail hereinafter with reference to the drawings, in which:
- Fig. 1: illustrates a sensor device according to an embodiment of the invention;
- Fig. 2A, 2B: illustrate the principle of operation of the method according to the invention;
- Fig. 3 and 4: illustrate the use of the method according to the invention for determining the number of droplets on a substrate;
- Fig. 5A-D: illustrate the determination of the contact angle of a droplet according to an embodiment of the method according to the invention;
- Fig. 6A-D: illustrate the determination of the volume of a droplet according to an embodiment of the method according to the invention; and
- Fig. 7: illustrates an acoustic device.

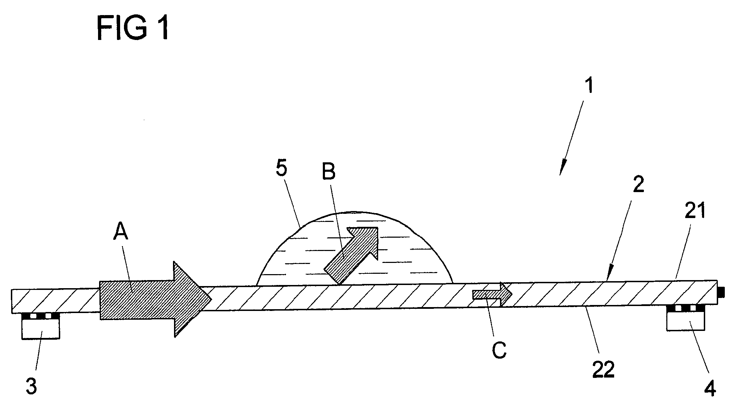

Figure 1 depicts a sensor device 1 according to an embodiment of the invention, the sensor device comprising a substrate 2 which has a first surface (side) 21 configured for receiving a liquid droplet 5.

A transmitter 3 for exciting acoustic waves A in the substrate 1 is arranged on a second surface (side) 22 of the substrate 2, the second surface 22 facing away from the first substrate surface 21. Further, a receiver 4 for receiving acoustic waves evoked by the transmitter 3 is disposed on the second substrate surface 22 in a row with the transmitter 3 along the propagating direction of the acoustic waves A excited in the substrate.

The receiver 4 generates an (electrical) signal upon receipt of acoustic waves evoked by the transmitter 3. Further more, the sensor device comprises evaluation means (not shown) for evaluating a signal generated by the receiver upon receipt of acoustic waves evoked by the transmitter, and determination means (not shown) for determining whether a droplet is present on the substrate and/or if a droplet is present determining the position and/or properties of the droplet using information of the evaluation means. For example, the evaluation means and the determination means are implemented into a microchip.

The working principle of the sensor device according to the invention relies on the fact that a part of the acoustic waves A excited by the transmitter is converted into acoustic waves in the droplet 5 (indicated by arrow "B"). Thus some of the energy of the substrate wave emerges from the substrate in the region of the droplet such that the intensity (i.e. the amplitude) of the acoustic waves in the substrate 1 decreases during the passage of the droplet region such that the amplitude of the acoustic wave (arrow "C") behind the droplet region is smaller than in front of the droplet region, which is illustrated by the smaller size of arrow C.

Thus, the amplitude of the signal generated by the receiver 4 will depend on whether or not a droplet is present on the substrate surface. The receiver signal amplitude will also depend on certain properties of the droplet such as the volume and the surface area covered by the droplet, i.e. the contact angle. As already mentioned above, the transmission time of the excited acoustic waves will also be influenced by the droplet such that both the signal amplitude and the transmission time can be used for characterizing a droplet on the substrate surface.

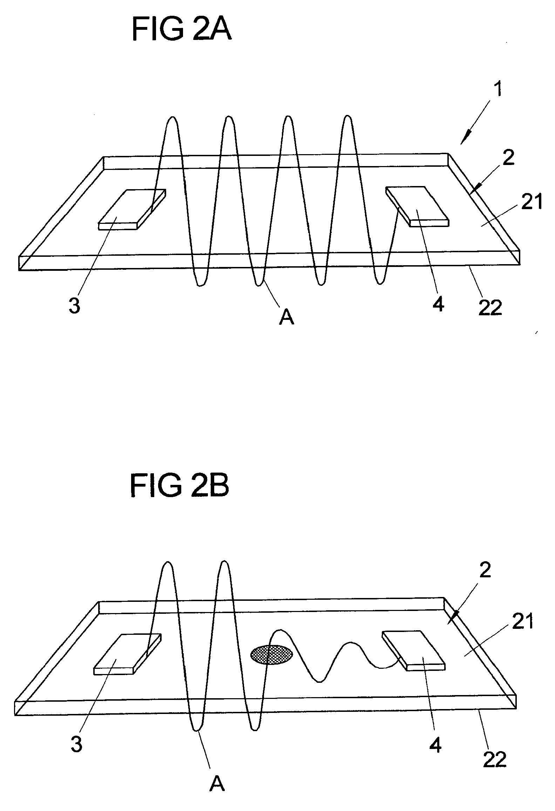

The effect that an acoustic wave propagating in the substrate is weakened by the presence of a droplet on the substrate surface is further shown in Figures 2A and 2B.

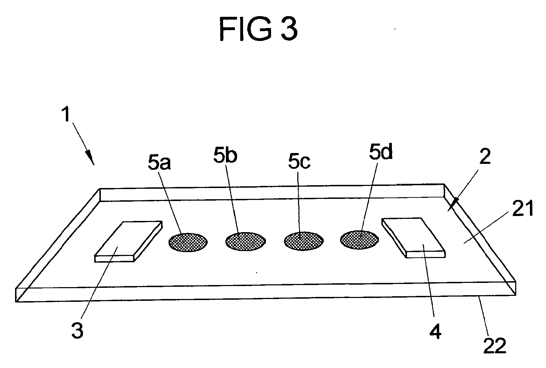

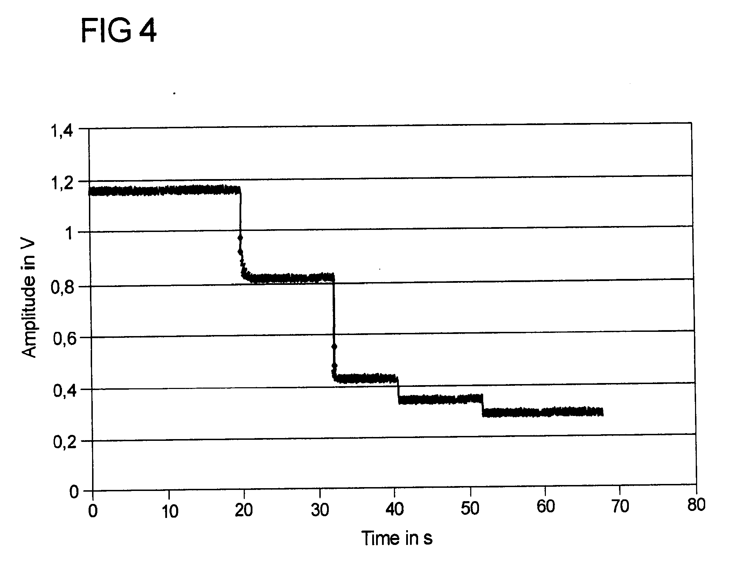

The sensor device and the method according to the invention may also be used to determine the number of droplets present on the substrate surface as illustrated in Figures 3 and 4, wherein a plurality (four) of droplets 5a - d is present on the substrate surface 21. An acoustic wave excited by the transmitter 3 will successively cross the four droplet regions such that the amplitude of the acoustic waves will successively decrease.

Thus, the amplitude of the receiver signal will depend on the number of droplets present on the substrate such that the amplitude will be smaller if four droplets are present than if only three or two droplets were present. This is confirmed by a measurement, wherein the measurement results are reproduced in Figure 4. According to Figure 4, the amplitude of the receiver signal is highest if no droplet at all is present and decreases with increasing number of droplets.

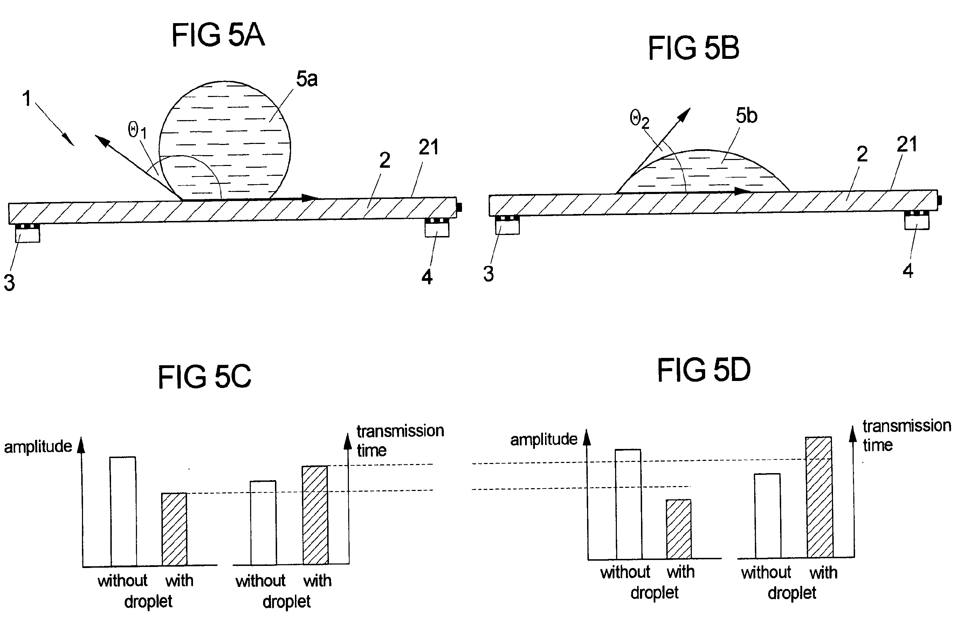

Figures 5A and 5B relate to another embodiment of the method according to the invention. Again, a transmitter 3 and a receiver 4 are arranged on a substrate 2. A liquid droplet 5a, 5b is present on a first side 21 of the substrate 2, the first side facing away from the substrate side carrying the transmitter 3 and the receiver 4. The droplet 5a of Figure 5A has a nearly spherical shape whereas the droplet 5b of Figure 5b is flattened such that it covers a larger area of the substrate surface 21 although its volume compares to the volume of droplet 5a. The shape of the droplet is governed by the contact angle Θ₁, Θ₂ at which the outer surface of the droplet meets the substrate surface. In the case of Figure 5A, the contact angle Θ₁ between droplet 5a and the substrate surface 21 is much larger than the contact angle Θ₂ of droplet 5b.

The corresponding bar charts of Fig. 5C and 5D illustrate that the signal generated by the receiver 4 upon receiving acoustic waves evoked by the transmitter 3 depends on the size of the surface that is covered by the droplet, i.e. the receiver signal depends on the contact angle. In particular, Figures 5C and 5D show the amplitude (left bars) and the transmission time (right bars) related to Figure 5A and Figure 5B, respectively. The hatched bars relate to the situation that the droplet 5a and 5b, respectively, is present on the surface, whereas the non-hatched bars relate to case that no droplet is arranged on the substrate surface. As can be seen, both the amplitude and the transmission times change if droplet the 5a, 5b is present on the substrate. Further, the receiver signals related to droplet 5a and the receiver signals related to droplet 5b differ in that the amplitude of the receiver signal related to droplet 5b, which covers a larger surface area than droplet 5a, is lower than the amplitude of the receiver signal related to droplet 5a.

Further more, the transmission time (propagating time) of the acoustic waves increases with larger contact area between the droplet and the substrate such that the transmission time related to droplet 5b (shown in Fig. 5D) is larger than the transmission time related to droplet 5a (shown in Fig. 5C). Thus, evaluating the receiver signal permits to characterize a change of the contact angle and also if the transmitter-receiver-setup is calibrated to determine absolute values of the contact angle.

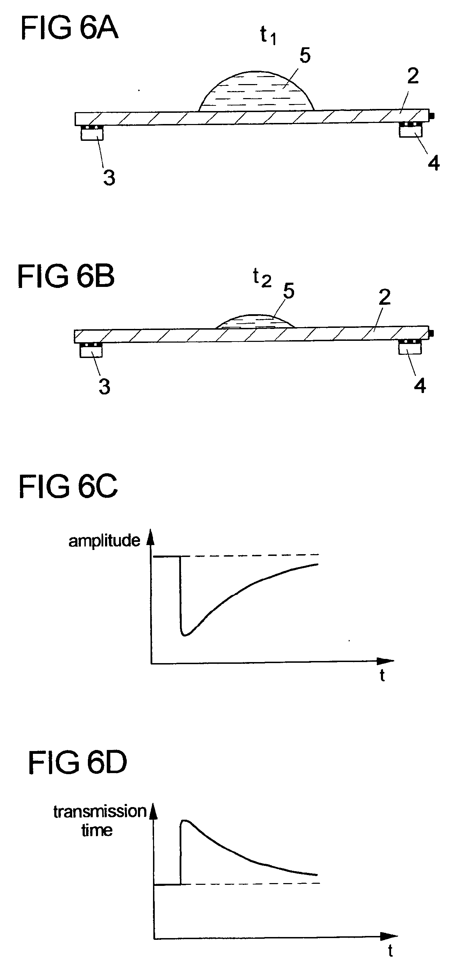

Figures 6A - 6D are related to another embodiment of the invention, wherein the evaporation of a droplet is monitored. Figure 6A relates to the state of a droplet 5 at a first point in time t₁ where the droplet 5 has a first volume. The droplet 5 evaporates such that at a second point in time t₂ the volume of the droplet is smaller than at t₁ as illustrated in Figure 6B.

As the substrate surface area that is covered by the droplet depends on the volume of the droplet the receiver signal changes if the droplet volume changes. This is depicted in Figures 6C and 6D showing the variation in time of the signal amplitude (Fig. 6C) and of the transmission time (Fig. 6D). As can be extracted from Figure 6C, the signal amplitude sharply decreases when the droplet is arranged on the substrate surface since acoustic waves excited in the substrate escape into the droplet as explained above. However, the droplet's volume decreases due to evaporation such that the surface area covered by the droplet is reduced and a smaller fraction of the acoustic waves in the substrate will be coupled into the droplet. Therefore, the amplitude of the receiver signal increases again and approaches the non-droplet value (indicated by a dashed line).

The time behaviour of the transmission time (shown in Figure 6D) qualitatively corresponds to the time behaviour of the signal amplitude. After a sharp increase due to the fact that the droplet is arranged on the substrate the transmission time decreases again as a smaller amount of acoustic wave energy is transferred to the droplet as the contact area between the droplet and the substrate surface becomes smaller. The transmission time similarly to the amplitude approaches the non-droplet value.

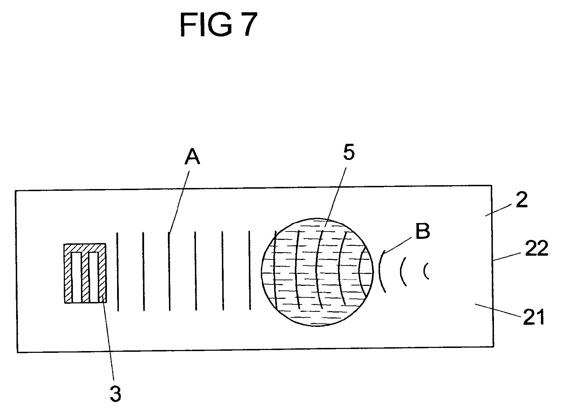

Figure 7 depicts an acoustic device. The acoustic device comprises a substrate 2 having a first surface 21 on which a droplet 5 is arranged. Further, a transmitter 3 is arranged on a second surface 22 of the substrate 2, the second surface 22 being opposite to the first surface 21. The transmitter 3 is configured for exciting acoustic waves A in the substrate.

Further, the droplet 5 is arranged in the substrate 2 in such a way that the acoustic waves A cross the surface area covered by the droplet 5. As the velocity of the acoustic wave depends on the kind of medium interfacing the substrate, the wave velocity in the region of the droplet, i.e. in the region of a solid - liquid interface, differs from the wave velocity in the region outside the droplet region, i.e. from the region of a solid - gas (air) interface.

Thus, in front of the droplet 5 (i.e. between the transmitter 3 and the droplet) the acoustic wave excited in the substrate possesses nearly plane wave fronts. However, the part of the wave fronts crossing the droplet region, i.e. the solid-liquid interface region, will be slowed down causing a bending of the wave fronts such that waves B comprising bent wave fronts develop. The bending of the wave fronts corresponds to focussing the originally plane acoustic waves.

## Claims

1. A method for investigating the presence and/or properties of a liquid droplet, comprising the steps of:
a) providing a substrate (2) for receiving a liquid droplet (5),
b) exciting acoustic waves in the substrate (2) by means of at least one transmitter (3),
c) receiving acoustic waves evoked by the transmitter (3) by at least one receiver (4),
d) evaluating a signal generated by the receiver (4) upon receipt of acoustic waves evoked by the transmitter (3),
e) determining whether a droplet (5) is present on the substrate (2) and/or if a droplet is present determining the position and/or properties of the droplet using the result of step d),
**characterized in that**
the frequency of the waves excited in the substrate (2) is such that the excited waves are Lamb waves or Lamb-Rayleigh waves, these wave types being defined by a correlation between the displacement movement of the opposite surfaces of the substrate, wherein
the transmitter (3) and the receiver (4) are arranged on the substrate (2) and the substrate (2) is arranged in the proximity of a conduct filled with a liquid such that liquid escaping from a leakage of the conduct generates one or more droplets (5) on a surface of the substrate (2), wherein the droplets will be detected according to step e).

2. The method as claimed in claim 1, wherein a first signal generated by the receiver (4) at a first point in time (t₁) and a second signal generated by the receiver at a second point in time (t₂) are evaluated.

3. The method as claimed in one of the preceding claims, wherein evaluating the signal generated by the receiver (4) comprises evaluating the amplitude and the time response of the signal.

4. The method as claimed in one of the preceding claims, wherein acoustic pulses are excited by transmitter (3).

5. The method as claimed in one of the preceding claims, wherein the substrate (2) has a first side (21) for receiving the droplet (5), the method comprising arranging the transmitter (3) and the receiver (4) on a second side (22) of the substrate (2), the second side (22) facing away from the first side (21).

6. The method as claimed in one of the preceding claims, wherein the method comprises arranging the transmitter (3) and the receiver (4) on an inner surface of a window pane.

7. The method as claimed in one of the preceding claims, wherein a volume of a droplet (5) on the substrate (2) is determined using the results of step d).

8. The method as claimed in one of the preceding claims, wherein the method comprises arranging the transmitter (3) and the receiver (4) on a substrate (2) that consists of at least one material selected from the group comprising glass, ceramics, plastic and metal.

9. The method as claimed in one of the preceding claims, wherein the transmitter and the receiver are realized by a single device which is operated as transmitter as well as receiver.

10. The method as claimed in claim 9, wherein
- reflecting means are provided for reflecting acoustic waves generated by the transmitter,
- for a first period of time, the device is operated as a transmitter generating an acoustic wave pulse, and
- for a second period of time, the device is operated as a receiver receiving the acoustic wave pulse generated by the device during the first period of time and reflected by the reflecting means.

11. A method for investigating the presence and/or properties of a liquid droplet, comprising the steps of:
a) providing a substrate (2) for receiving a liquid droplet (5),
b) exciting acoustic waves in the substrate (2) by means of at least one transmitter (3),
c) receiving acoustic waves evoked by the transmitter (3) by at least one receiver (4),
d) evaluating a signal generated by the receiver (4) upon receipt of acoustic waves evoked by the transmitter (3),
e) determining whether a droplet (5) is present on the substrate (2) and/or if a droplet is present determining the position and/or properties of the droplet using the result of step d),
**characterized in that**
the frequency of the waves excited in the substrate (2) is such that the excited waves are Lamb waves or Lamb-Rayleigh waves, these wave types being defined by a correlation between the displacement movement of the opposite surfaces of the substrate, wherein a contact angle (Θ₁, Θ₂) of a droplet (5) on the substrate (2) is determined using the results of step d).

12. A sensor device, in particular for carrying out the method according to claim 11, comprising
- a substrate (2) for receiving a liquid droplet (5),
- at least one transmitter (3) for exciting acoustic waves in the substrate (2),
- at least one receiver (4) for receiving acoustic waves evoked by the transmitter (3),
- evaluation means for evaluating a signal generated by the receiver upon receipt of acoustic waves evoked by the transmitter (3),
**characterized by**
determination means for determining properties of the droplet (5) in the form of a contact angle (Θ₁, Θ₂) of the droplet (5) using information of the evaluation means, wherein the transmitter (3) is configured to excite Lamb waves or Lamb-Rayleigh waves in the substrate (2), these wave types being defined by a correlation between the displacement movement of the opposite surfaces of the substrate.

13. The sensor device as claimed in claim 12, wherein the sensor device comprises reflecting means and wherein the transmitter (3) and the receiver (4) are arranged with respect to the reflecting means in such a way that acoustic waves excited in the substrate (2) by the transmitter (3) are reflected by the reflecting means such that the acoustic waves pass the region of the liquid droplet at least twice before arriving at the receiver (4).

14. The sensor device as claimed in claim 13, wherein the reflecting means comprise an edge of the substrate (2).

15. The sensor device as claimed in one of the claims 12 to 14, wherein the transmitter (3) and the receiver (3) are realized by a single device which can be operated as transmitter as well as receiver.

## Patentansprüche

1. Ein Verfahren zur Untersuchung der Präsens und/oder Eigenschaften eines Flüssigkeitstropfens umfassend die Schritte:
a) Bereitstellen eines Substrates (2) zum Empfang eines Flüssigkeitstropfens (5),
b) Anregen von akustischen Wellen in dem Substrat (2) mittels mindestens eines Transmitters (3),
c) Empfangen der durch den Transmitter (3) hervorgerufenen akustischen Wellen durch mindestens einen Empfänger (4),
d) Evaluieren eines von dem Empfänger (4) nach Empfang der durch den Transmitter (3) hervorgerufenen akustischen Wellen erzeugten Signals,
e) Bestimmen, ob ein Tropfen (5) auf dem Substrat (2) anwesend ist und/oder wenn ein Tropfen anwesend ist, Bestimmen der Position und/oder Eigenschaften des Tropfens unter Verwendung des Ergebnisses des Schrittes d),
**dadurch gekennzeichnet, dass**
die Frequenz der in dem Substrat (2) angeregten Wellen derart ist, dass die angeregten Wellen Lamb-Wellen oder Lamb-Rayleigh-Wellen sind, wobei diese Wellentypen durch eine Korrelation zwischen der Verschiebungsbewegung der gegenüberliegenden Oberflächen des Substrates definiert werden, wobei der Transmitter (3) und der Empfänger (4) auf dem Substrat (2) angeordnet sind und das Substrat (2) in der Nähe einer Leitung angeordnet ist, die mit einer Flüssigkeit gefüllt ist, so dass eine aus einem Leck in der Leitung austretende Flüssigkeit einen oder mehrere Tropfen (5) auf einer Oberfläche des Substrates (2) erzeugt, wobei die Tropfen gemäß Schritt e) detektiert werden.

2. Verfahren gemäß Anspruch 1, wobei ein erstes Signal, das durch den Empfänger (4) zu einem ersten Zeitpunkt (t₁) erzeugt wird, und ein zweites Signal, das durch den Empfänger zu einem zweiten Zeitpunkt (t₂) erzeugt wird, ausgewertet werden.

3. Verfahren gemäß einem der vorhergehenden Ansprüche, wobei die Auswertung des durch den Empfänger (4) erzeugten Signales eine Auswertung der Amplitude und der zeitlichen Antwort des Signales umfasst.

4. Verfahren gemäß einem der vorhergehenden Ansprüche, wobei die akustischen Pulse durch den Transmitter (3) angeregt werden.

5. Verfahren gemäß einem der vorhergehenden Ansprüche, wobei das Substrat (2) eine erste Seite (21) zum Empfang des Tropfens (5) aufweist, wobei das Verfahren die Anordnung des Transmitters (3) und des Empfängers (4) auf einer zweiten Seite (22) des Substrates (2) umfasst, wobei die zweite Seite (22) gegenüberliegend von der ersten Seite (21) ist.

6. Verfahren gemäß einem der vorhergehenden Ansprüche, wobei das Verfahren die Anordnung des Transmitters (3) und des Empfängers (4) auf einer inneren Oberfläche einer Fensterscheibe umfasst.

7. Verfahren gemäß einem der vorhergehenden Ansprüche, wobei ein Volumen eines Tropfens (5) auf dem Substrat (2) unter Verwendung der Ergebnisse des Schritts d) bestimmt wird.

8. Verfahren gemäß einem der vorhergehenden Ansprüche, wobei das Verfahren die Anordnung des Transmitters (3) und des Empfängers (4) auf einem Substrat (2) umfasst, das aus einem Material ausgewählt aus der Gruppe umfassend Glas, Keramik, Kunststoff und Metall besteht.

9. Verfahren gemäß einem der vorhergehenden Ansprüche, wobei der Transmitter und der Empfänger durch eine einzelne Vorrichtung verwirklicht werden, welche sowohl als Transmitter als auch als Empfänger betrieben wird.

10. Verfahren gemäß Anspruch 9, wobei
- reflektierende Mittel zur Reflektion der durch den Transmitter generierten akustischen Wellen vorgesehen sind,
- für eine erste Zeitperiode die Vorrichtung als ein Transmitter zur Erzeugung eines akustischen Wellenpulses betrieben wird, und
- für eine zweite Zeitperiode die Vorrichtung als ein Empfänger zum Empfang des akustischen Wellenimpulses, erzeugt durch die Vorrichtung während der ersten Zeitperiode und reflektiert durch die Reflektionsmittel, betrieben wird.

11. Ein Verfahren zur Untersuchung der Präsens und/oder Eigenschaften eines Flüssigkeitstropfens umfassend die Schritte:
a) Bereitstellen eines Substrates (2) zum empfangen eines Flüssigkeitstropfens (5),
b) Anregen von akustischen Wellen in dem Substrat (2) mittels mindestens eines Transmitters (3),
c) Empfangen von der durch den Transmitter (3) hervorgerufenen akustischen Wellen durch mindestens einen Empfänger (4),
d) Auswerten eines durch den Empfänger (4) erzeugten Signales nach Empfang von durch den Transmitter (3) hervorgerufenen akustischen Wellen,
e) Bestimmen, ob ein Tropfen (5) auf dem Substrat (2) anwesend ist und/oder wenn ein Tropfen anwesend ist, Bestimmen der Position und/oder Eigenschaften des Tropfens unter Verwendung der Ergebnisse des Schrittes d),
**dadurch gekennzeichnet, dass**
die Frequenz der in dem Substrat (2) angeregten Wellen derart ist, dass die angeregten Wellen Lamb-Wellen oder Lamb-Rayleigh-Wellen sind, wobei diese Wellentypen durch eine Korrelation zwischen der Verschiebungsbewegung der gegenüberliegenden Oberflächen des Substrates definiert sind, wobei ein Kontaktwinkel (Θ₁, Θ₂) eines Tropfens (5) auf dem Substrat (2) unter Verwendung der Ergebnisse des Schritts d) bestimmt wird.

12. Eine Sensorvorrichtung, insbesondere zur Ausführung des Verfahrens gemäß Anspruch 11, umfassend
- ein Substrat (2) zur Aufnahme eines Flüssigkeitstropfens (5),
- mindestens einen Transmitter (3) zur Anregung von akustischen Wellen in dem Substrat (2),
- mindestens einen Empfänger (4) zum Empfangen von durch den Transmitter (3) hervorgerufenen akustischen Wellen,
- Auswertemittel zum Auswerten eines durch den Empfänger nach Empfang von durch
den Transmitter (3) hervorgerufenen akustischen Wellen erzeugten Signales,
**gekennzeichnet durch**
Bestimmungsmittel zum Bestimmen der Eigenschaften des Tropfens (5) in der Form eines Kontaktwinkels (Θ₁, Θ₂) des Tropfens (5) unter Verwendung der Informationen des Auswertemittels, wobei der Transmitter (3) gestaltet ist, um Lamb-Wellen oder Lamb-Rayleigh-Wellen in dem Substrat (2) anzuregen, wobei diese Wellentypen **durch** eine Korrelation zwischen der Verschiebungsbewegung der gegenüberliegenden Oberflächen des Substrates definiert sind.

13. Sensorvorrichtung gemäß Anspruch 12, wobei die Sensorvorrichtung Reflektionsmittel umfasst und wobei der Transmitter (3) und der Empfänger (4) in Bezug auf das Reflektionsmittel derart angeordnet ist, so dass die in dem Substrat (2) durch den Transmitter (3) angeregten akustischen Wellen durch das Reflektionsmittel reflektiert werden, so dass die akustischen Wellen den Bereich des Flüssigkeitstropfens zumindestens zweimal vor Ankunft an dem Empfänger (4) passiert.

14. Sensorvorrichtung gemäß Anspruch 13, wobei die Reflektionsmittel eine Kante des Substrates (2) umfassen.

15. Sensorvorrichtung gemäß einem der Ansprüche 12 bis 14, wobei der Transmitter (3) und der Empfänger (3) durch eine einzelne Vorrichtung verwirklicht werden, die sowohl als Transmitter als auch als Empfänger betrieben werden können.

## Revendications

1. Procédé d'investigation de la présence et/ou de propriétés d'une goutte liquide, comprenant les étapes de :
a) fourniture d'un substrat (2) pour recevoir une goutte liquide (5),
b) excitation d'ondes acoustiques dans le substrat (2) au moyen d'au moins un émetteur (3),
c) réception d'ondes acoustiques provoquées par l'émetteur (3) par au moins un récepteur (4),
d) évaluation d'un signal généré par le récepteur (4) lors de la réception des ondes acoustiques provoquées par l'émetteur (3),
e) détermination si une goutte (5) est présente sur le substrat (2) et/ou, si une goutte est présente, détermination de la position et/ou des propriétés de la goutte à l'aide du résultat de l'étape d),
**caractérisé en ce que**
la fréquence des ondes excitées dans le substrat (2) est telle que les ondes excitées sont des ondes de Lamb ou des ondes de Lamb-Rayleigh, ces types d'ondes étant définis par une corrélation entre le mouvement de déplacement des surfaces opposées du substrat,
dans lequel
l'émetteur (3) et le récepteur (4) sont agencés sur le substrat (2) et le substrat (2) est agencé à proximité d'une conduite remplie d'un liquide de sorte que le liquide s'échappant d'une fuite de la conduite génère une ou plusieurs gouttes (5) sur une surface du substrat (2), dans lequel les gouttes seront détectées selon l'étape e).

2. Procédé selon la revendication 1, dans lequel un premier signal généré par le récepteur (4) à un premier instant dans le temps (t₁) et un second signal généré par le récepteur à un second instant dans le temps (t₂) sont évalués.

3. Procédé selon l'une quelconque des revendications précédentes, dans lequel l'évaluation du signal généré par le récepteur (4) comprend une évaluation de l'amplitude et de la réponse temporelle du signal.

4. Procédé selon l'une quelconque des revendications précédentes, dans lequel des impulsions acoustiques sont excitées par l'émetteur (3).

5. Procédé selon l'une quelconque des revendications précédentes, dans lequel le substrat (2) a une première face (21) pour recevoir la goutte (5), le procédé comprenant un agencement de l'émetteur (3) et du récepteur (4) sur une seconde face (22) du substrat (2), la seconde face (22) étant à l'opposé de la première face (21).

6. Procédé selon l'une quelconque des revendications précédentes, dans lequel le procédé comprend un agencement de l'émetteur (3) et du récepteur (4) sur une surface interne d'un panneau de fenêtre.

7. Procédé selon l'une quelconque des revendications précédentes, dans lequel un volume d'une goutte (5) sur le substrat (2) est déterminé à l'aide des résultats de l'étape d).

8. Procédé selon l'une quelconque des revendications précédentes, dans lequel le procédé comprend un agencement de l'émetteur (3) et du récepteur (4) sur un substrat (2) qui est constitué au moins d'un matériau sélectionné parmi le groupe comprenant du verre, des céramiques, des plastiques et des métaux.

9. Procédé selon l'une quelconque des revendications précédentes, dans lequel l'émetteur et le récepteur sont réalisés par un seul dispositif qui est employé aussi bien en tant qu'émetteur qu'en tant que récepteur.

10. Procédé selon la revendication 9, dans lequel
- des moyens de réflexion sont fournis pour réfléchir des ondes acoustiques générées par l'émetteur,
- pendant une première période de temps, le dispositif est employé en tant qu'émetteur générant une impulsion d'onde acoustique, et
- pendant une seconde période de temps, le dispositif est employé en tant que récepteur recevant l'impulsion d'onde acoustique générée par le dispositif durant la première période de temps et réfléchie par les moyens de réflexion.

11. Procédé d'investigation de la présence et/ou de propriétés d'une goutte liquide, comprenant les étapes de :
a) fourniture d'un substrat (2) pour recevoir une goutte liquide (5),
b) excitation d'ondes acoustiques dans le substrat (2) au moyen d'au moins un émetteur (3),
c) réception des ondes acoustiques provoquées par l'émetteur (3) par au moins un récepteur (4),
d) évaluation d'un signal généré par le récepteur (4) lors de la réception d'ondes acoustiques provoquées par l'émetteur (3),
e) détermination si une goutte (5) est présente sur le substrat (2) et/ou, si une goutte est présente, détermination de la position et/ou des propriétés de la goutte à l'aide du résultat de l'étape d),
**caractérisé en ce que**
la fréquence des ondes excitées dans le substrat (2) est telle que les ondes excitées sont des ondes Lamb ou des ondes Lamb-Rayleigh, ces types d'ondes étant définis par une corrélation entre le mouvement de déplacement des surfaces opposées du substrat, dans lequel un angle de contact (Θ₁, Θ₂) d'une goutte (5) sur le substrat (2) est déterminé à l'aide des résultats de l'étape d).

12. Dispositif détecteur, en particulier pour exécuter le procédé selon la revendication 11, comprenant
- un substrat (2) pour recevoir une goutte liquide (5),
- au moins un émetteur (3) pour exciter des ondes acoustiques dans le substrat (2),
- au moins un récepteur (4) pour recevoir des ondes acoustiques provoquées par l'émetteur (3),
- des moyens d'évaluation pour évaluer un signal généré par le récepteur lors d'une réception des ondes acoustiques provoquées par l'émetteur (3),
**caractérisé par**
des moyens de détermination pour déterminer des propriétés de la goutte (5) sous la forme d'un angle de contact (Θ₁, Θ₂) de la goutte (5) à l'aide d'informations des moyens d'évaluation, dans lequel l'émetteur (3) est configuré pour exciter des ondes de Lamb ou des ondes de Lamb-Rayleigh dans le substrat, ces types d'ondes étant définis par une corrélation entre le mouvement de déplacement des surfaces opposées du substrat.

13. Dispositif détecteur selon la revendication 12, dans lequel le dispositif détecteur comprend des moyens de réflexion et dans lequel l'émetteur (3) et le récepteur (4) sont agencés par rapport aux moyens de réflexion de manière telle que des ondes acoustiques excitées dans le substrat (2) par l'émetteur (3) sont réfléchies par les moyens de réflexion de sorte que les ondes acoustiques traversent la région de la goutte liquide au moins deux fois avant d'arriver au récepteur (4).

14. Dispositif détecteur selon la revendication 13, dans lequel les moyens de réflexion comprennent un bord du substrat (2).

15. Dispositif détecteur selon l'une quelconque des revendications 12 à 14, dans lequel l'émetteur (3) et le récepteur (3) sont réalisés par un seul dispositif qui peut être employé aussi bien en tant qu'émetteur qu'en tant que récepteur.
